Europäisches Patentamt

European Patent Office

Office européen des brevets

(19)

(11) Veröffentlichungsnummer: **0 035 710**
**B1**

(12) **EUROPÄISCHE PATENTSCHRIFT**

(45) Veröffentlichungstag der Patentschrift:
01.02.84

(51) Int. Cl.³: **H 02 M 3/135**

(21) Anmeldenummer: 81101417.4

(22) Anmeldetag: 26.02.81

(54) Gleichstromstellerschaltung.

(30) Priorität: 07.03.80 DE 3008907

(43) Veröffentlichungstag der Anmeldung:
16.09.81 Patentblatt 81/37

(45) Bekanntmachung des Hinweises auf die Patenterteilung:
01.02.84 Patentblatt 84/5

(84) Benannte Vertragsstaaten:
AT CH DE LI

(56) Entgegenhaltungen:
CH - A - 561 477
DE - A - 2 424 369
DE - A - 2 632 785
DE - A - 2 710 980
US - A - 3 414 797

(73) Patentinhaber: SIEMENS AKTIENGESELLSCHAFT,
Berlin und München Wittelsbacherplatz 2,
D-8000 München 2 (DE)

(72) Erfinder: Arremann, Hans, Dr., Schenkstrasse 156,
D-8520 Erlangen (DE)

## Gleichstromstellerschaltung

Die Erfindung betrifft eine Gleichstromstellerschaltung mit den im Oberbegriff des Anspruchs 1 aufgeführten Merkmalen. Eine derartige Gleichstromstellerschaltung ist aus der deutschen Offenlegungsschrift 2 622 351 bekannt.

Mit einer herkömmlichen Stellerschaltung kann die Spannung einer vorgegebenen Gleichspannungsquelle so herabgesetzt werden, daß der Mittelwert der Eingangsspannung für eine angeschlossene Last bis nahe an den Wert Null herabgesteuert werden kann. Dieser Mittelwert ist in erster Linie abhängig von der Einschaltdauer des Hauptventils. Bedingt durch das erforderliche Umschwingen der Ladung des Kommutierungskondensators können dabei gewisse Mindesteinschaltdauern des Hauptventils nicht unterschritten werden. Während des Löschvorganges wird die Spannung des Kommutierungskondensators zusätzlich zur Eingangsspannung an die Last gelegt. Folglich können im normalen Steuerbereich, in dem die Eingangsspannung der Last (d. h. die Ausgangsspannung der Schaltung) durch die Einschaltdauer des Hauptventils gesteuert wird, nur Mindestspannungen von etwa 8 bis 12% der Eingangsgleichspannung erreicht werden.

In der erwähnten deutschen Offenlegungsschrift 2 622 351 ist daher vorgesehen, diesen normalen Steuerbereich durch einen weiteren Bereich für kleine Ausgangsspannungen zu ergänzen: Das Hauptventil bleibt gesperrt und durch eine entsprechende Steuerung des Kommutierungsventils, des Umschwingventils und des ebenfalls steuerbar ausgeführten Rückschwingventils wird an die Last nur ein bestimmter Ausschnitt der Kondensatorspannung während des Umschwingvorganges gelegt (»Anschnittsteuerung«). Gegenüber herkömmlichen Gleichstromstellerschaltungen zeichnet sich die Schaltung durch die Polarität des Umschwingventils und des Rückschwingventils aus.

Im normalen Steuerbereich ist vorgesehen, den Kommutierungskondensator in der Zeit zwischen Erlöschen und Wiederzünden des Hauptventils in der Polarität zu belassen, die er durch den während des Löschvorganges auf den Löschzweig kommutierten Strom angenommen hat. Dieser Zustand des Kommutierungskondensators wird auch nach Zündung des Hauptventils beibehalten und erst zu einem auf die Dimensionierungen der Umschwingdrossel und des Kommutierungskondensators abgestimmten Zeitpunkt vor dem vorgesehenen Zünden des Kommutierungsventils (Löschventils) wird durch Zünden des Umschwingventils die Kondensatorladung umgepolt und die Schaltung für die Löschung des Hauptventils vorbereitet. Die Zündung von Löschventil und Rückschwingventil erfolgt gleichzeitig. Zur Verkleinerung der Ausgangsspannung wird die Einschaltdauer des Hauptventils durch Verkürzung des Zeitabstandes zwischen den Zündzeitpunkten von Hauptventil und Umschwingventil verringert, bis beide Zündzeitpunkte zusammenfallen.

Zur weiteren Verkleinerung der Eingangsspannung wird nun auf die »Anschnittssteuerung« übergegangen, bei der das Hauptventil keine Zündimpulse mehr erhält. Die Ausgangsspannung entsteht dadurch, daß im Zeitintervall zwischen der Zündung des Rückschwingventils und dem Ende des Rückschwingvorganges (Erlöschen des Rückschwingventils) das Kommutierungsventil stromführend ist und somit an die Last eine Überlagerung der Spannung der Gleichspannungsquelle und der Spannung am Kommutierungskondensator gelegt ist. Die Verkleinerung der Ausgangsspannung geschieht also dadurch, daß der Zündzeitpunkt für das Kommutierungsventil, der in die Stromführungsdauer des Rückschwingventils (das auch eine Diode sein kann) zu legen ist, verzögert wird und zum Löschzeitpunkt des Rückschwingventils verschoben wird. Dadurch wird der an die Last zu legende Ausschnitt der Kondensatorspannung verkleinert.

Es hat sich aber gezeigt, daß insbesondere bei einem Betrieb im Anschnittssteuerbereich eine erhebliche Überladung des Kondensators über die zum Löschen des Hauptthyristors nötige Spannung auftritt. Da die Ventile und Drosseln auf den maximalen Umschwingstrom und die maximale Sperrspannung ausgelegt werden müssen, sollen derartige Überspannungen verhindert werden. Daher ist in der erwähnten Offenlegungsschrift vorgesehen, antiparallel zum Kommutierungsventil ein Ladeventil mit vorgeschaltetem ohmschen Widerstand zu schalten, durch den die Überladung teilweise in die Gleichspannungsquelle zurückgespeist, teilweise in Wärme umgesetzt wird. Um zu verhindern, daß im normalen Steuerbereich bei gezündetem Hauptventil der Kondensator über den Rückladezweig teilweise entladen wird und die Kondensatorladung nicht mehr zur Löschung des Hauptventils ausreicht, ist in der deutschen Offenlegungsschrift 2 635 953 eine veränderte Impulsfolge für den Hauptsteuerbereich angegeben, bei der das Umschwingventil jeweils kurz vor dem Hauptventil gezündet wird.

Derartige Anordnungen haben aber den Nachteil, daß sie wegen des Rückladezweiges einen hohen Material- und Platzbedarf sowie wegen der ohmschen Widerstände einen geringeren Wirkungsgrad aufweisen.

Der Erfindung liegt die Aufgabe zugrunde, einen Gleichstromsteller anzugeben, dessen Ausgangsspannung über den Bereich, der durch die Steuerung der Hauptventil-Einschaltdauer erreichbar ist, erweitert ist und bei dem eine Überladung des Kommutierungskondensators ohne Verwendung eines Rückladezweiges gering gehalten wird.

Gemäß der Erfindung wird diese Aufgabe gelöst durch eine Schaltung mit den im Anspruch 1 angegebenen Merkmalen.

Wie bereits bei bekannten Schaltungen kann als Rückschwingdrossel und Umschwingdrossel eine gemeinsame Induktivität verwendet werden, die einer Antiparallelschaltung von Umschwingventil und Rückschwingventil vorgeschaltet ist. Diese Induktivität und der Kommutierungskondensator bilden somit zum Umschwingen und Rückschwingen einen Schwingkreis, in dem das Rückschwingventil bzw. das Umschwingventil liegen. Gemäß der Erfindung ist diese Induktivität jedoch in zwei Teile aufgeteilt, wobei der eine Teil von einer weiteren Drossel gebildet wird, die in die Verbindungsleitung zwischen dem Kommutierungskondensator und dem einen Anschluß der Last angeordnet ist. Die beiden Freilaufdioden verbinden die beiden Drosselenden mit der vom anderen Lastanschluß kommenden Verbindungsleitung, so daß dieser Teil der Schwingkreisinduktivität bei Betriebszuständen kurzgeschlossen ist, bei denen beide Freilaufdioden gleichzeitig leitend sind.

Die Erläuterung der Erfindung und weiterer vorteilhafter Ausgestaltungen wird anhand einer Figur und eines bevorzugten Ausführungsbeispiels näher erläutert.

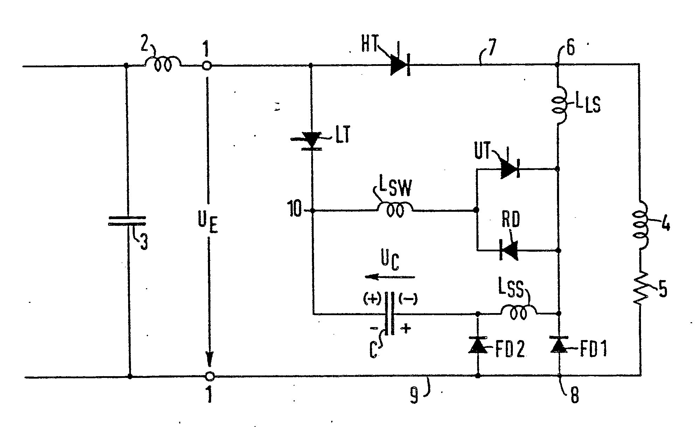

In der Figur sind die Klemmen 1 einer Gleichspannungsquelle, deren Induktivität 2 und deren Kapazität 3 symbolisch dargestellt. Insbesondere kann es sich hierbei um ein Gleichspannungsversorgungsnetz mit einer nachgeschalteten Eingangsinduktivität und einem Glättungskondensator handeln. Der Verbraucher ist durch eine Induktivität 4 mit ohmschen Anteil 5 symbolisiert. Die Eingangsklemme 6 ist über eine Leitung 7 mit dem einen Pol der Gleichspannungsquelle, der andere Lasteingang 8 über eine Leitung 9 mit dem anderen Pol der Gleichspannungsquelle verbunden. In der Leitung 7 liegt das steuerbare Hauptventil der Gleichstromstellerschaltung, das als Thyristor HT ausgeführt ist. Die beiden Anschlüsse des Hauptventils HT sind durch einen Löschzweig miteinander verbunden. Der Löschzweig besteht aus einem steuerbaren, parallel zum Hauptventil gepolten Kommutierungsventil, das im normalen Steuerbereich als Löschventil dient und ebenfalls als Thyristor LT ausgeführt ist. Diesem Kommutierungsventil LT ist lastseitig ein Kommutierungskondensator C nachgeschaltet. Die eine Elektrode des Kommutierungsventils LT ist also zusammen mit einer Elektrode des Hauptventils HT an einen Ausgang der Gleichspannungsquelle angeschlossen, die andere Elektrode des Kommutierungsventils LT ist über den Kondensator C mit der anderen Elektrode des Hauptventils und dem Lasteingang 6 verbunden. Parallel zum Kommutierungskondensator liegt ein Umschwingzweig, der aus einem steuerbaren Umschwingventil (Umschwingthyristor UT) und einer Umschwingdrossel gebildet wird. Dieser Umschwingzweig liegt in Reihe mit dem Kommutierungsventil LT, d. h. er führt vom Verbindungspunkt zwischen LT und C zum Lasteingang 6. Das Umschwingventil UT ist in Stromflußrichtung des Kommutierungsventils LT gepolt. Ebenfalls parallel zum Kommutierungskondensator und in Reihe mit dem Kommutierungsventil ist ein Rückschwingzweig angeordnet, der ein entgegengesetzt zur Stromflußrichtung des Kommutierungsventils gepoltes Rückschwingventil mit vorgeschalteter Rückschwingdrossel enthält. Das Rückschwingventil kann ein Thyristor sein, es kann aber auch als Rückschwingdiode RD ausgeführt sein. Vorteilhaft ist es, als Rückschwingdrossel und Umschwingdrossel nur eine gemeinsame Drossel $L_{SW}$ zu verwenden; in diesem Fall sind die Ventile UT und RD antiparallel geschaltet und liegen gemeinsam in Reihe mit der Drossel $L_{SW}$ in der Verbindungsleitung zwischen den Punkten 10 und 6.

Ferner ist parallel zur Last 4, 5 ein erstes Freilaufventil (Diode FD1) angeordnet. Die Anordnung dieser Bauteile entspricht den bekannten Schaltungen, wobei jedoch auf einen Rückladezweig entsprechend den bekannten Anordnungen verzichtet ist. Ferner kann die Anordnung durch eine Schutzinduktivität $L_{LS}$ für die Ventile HT und FD1 ergänzt werden, falls die Eingangsinduktivität 2 hierzu nicht ausreicht. Dabei ist darauf zu achten, daß diese Schutzinduktivität außerhalb des Strompfades, der von den Elementen 2, LT, C, FD2 und der Leitung 9 gebildet wird, liegt.

Gemäß der Erfindung wird die Schaltung ergänzt durch eine weitere Drossel $L_{SS}$, die innerhalb des zum Rückschwingkreis parallelen Teiles des Löschzweiges dem zum Lasteingang 6 führenden Anschluß des Kommutierungskondensators C nachgeschaltet ist, und durch ein zweites Freilaufventil, das die von der Spannungsquelle 1 zum anderen Lasteingang 8 führende Verbindungsleitung mit dem lastseitigen Anschluß des Kommutierungskondensators C verbindet. Dieses zweite Freilaufventil FD2 ist parallel zum ersten Freilaufventil FD1 gepolt. Falls beide Ventile stromführend sind, geben sie also eine Leitung zur Überbrückung der weiteren Drossel $L_{SS}$ frei.

Dieser Schaltung liegen Erkenntnisse über die Ursache einer Kondensatorüberladung zugrunde, die im folgenden für den Anschnittssteuerbereich (HT bleibt gesperrt) und den Fall, daß FD2 wie bei den bekannten Anordnungen nicht vorhanden ist, summarisch zusammengefaßt werden.

Bei gesperrtem Kommutierungsventil LT führt FD1 den gesamten Laststrom und die Spannung $U_C$ am Kommutierungskondensator C besitzt die negative, in Klammern angegebene Polarität. Durch Zünden des Umschwingventils UT schwingt die Kondensatorladung um, anschließend wird RD leitend und die Kondensatorladung schwingt wieder zurück. Es liegt also ein vom Kondensator C und einer Schwinginduktivität

$$L_S = L_{SW} + L_{SS}$$

gebildeter Schwingkreis vor. Während des Umschwingens wird die ursprünglich im Kondensator C gespeicherte Energie in der Induktivität gespeichert, um während des Rückschwingens wieder in den Kondensator eingespeist zu werden. Im Idealfall, in dem der Schwingkreis keine Dämpfung durch ohmsche Widerstände enthält, kehrt die Spannung nach einer sinusförmigen Schwingung wieder auf ihren Ursprungswert zurück. Wird nun während dieser Schwingung das Kommutierungsventil LT gezündet, so wird der Schwingkreis bis zum Erlöschen des Freilaufventils FD1 an die Spannung der Spannungsquelle gelegt und es kommt somit kurzfristig zu einer Stromerhöhung durch den Kommutierungskondensator C. Die Schwingkreisenergie wird damit bei Zünden von LT kurzfristig erhöht. Nach Beendigung des Rückschwingens ist daher der Kondensator stärker aufgeladen als vor Beginn des Umschwingens. Mit jedem Zündimpuls wächst somit die Kondensatorspannung und ist letztlich nur begrenzt durch die ohmschen Widerstände der Schaltung. Diese sollen aber im Hinblick auf einen hohen Wirkungsgrad gering gehalten werden.

Durch die Erfindung soll nun dem Schwingkreis während des Umschwingens und Rückschwingens Energie entzogen werden, um die bei der nachfolgenden Zündung des Kommutierungsventils LT zufließende Energie zu kompensieren. Dies wird erreicht durch die Aufspaltung der Schwingkreisinduktivität in die beiden Teildrosseln $L_{SW}$ und $L_{SS}$, wobei die Drossel $L_{SS}$ durch die geschilderte Anordnung der beiden Freilaufventile FD1 und FD2 überbrückbar ist.

Durch Zünden des Umschwingventils UT wird nämlich die FD2-Kathode gegenüber der FD1-Kathode negativ, so daß FD1 sperrt und FD2 den Laststrom übernimmt. Beim anschließenden Nulldurchgang der Kondensatorspannung kommutiert der Strom von FD2 auf FD1. Diese Kommutierung verläuft verhältnismäßig langsam, so daß $L_{SS}$ eine Zeit lang kurzgeschlossen und die Schwingkreisinduktivität nur von $L_{SW}$ gebildet wird. Infolgedessen steigt auch die Kondensatorspannung langsamer an, was einer Verminderung der Energie im Schwingkreis entspricht. Diese Energieverminderung wird dadurch hervorgerufen, daß die abzuführende Energie außerhalb des Schwingkreises, nämlich in der Induktivität $L_{SS}$, gespeichert wird, ohne daß hierbei ohmsche Verluste auftreten. Dabei kann durch Optimierung der Drosseldimensionen erreicht werden, daß dem Schwingkreis gerade so viel Energie entzogen wird, als nach Zünden des Kommutierungsventils zugeführt wird. Es ergibt sich dann eine minimale Kondensatorüberladung

$$U_C = I_A \sqrt{L_E/C},$$

wobei $I_A$ der Laststrom ist. Diese Überladung betrug bei einer ersten Laboranlage nur noch 10% der Eingangsgleichspannung, während sie bei einer gleichen Anlage ohne zweite Freilaufdiode 60% betrug. Ferner werden die meisten Ventile wegen der Spannungsteilung an den Drosseln $L_{SW}$ und $L_{SS}$ spannungsmäßig weniger beansprucht. Die Löschspannungsspitze in der Ausgangsspannung ist ebenfalls verkleinert, bei der erwähnten Laboranlage um 50%. Die Folge davon ist, daß nicht nur auf einen Rückladungszweig verzichtet werden kann, sondern auch die übrigen Bauteile auf eine geringere maximale Belastung ausgelegt werden können.

Die optimale Aufteilung der Schwingkreisinduktivität in die Induktivitäten $L_{SS}$ und $L_{SW}$ ergibt sich aus einer Betrachtung des Schwingkreises. Für den Schwingkreis kann die Schwingkreisdämpfung durch den Parameter h erfaßt werden, der das Verhältnis der Kondensatorspannung $\hat{U}$ vor Zünden des Rückschwingventils zur Kondensatorspannung $U_{180°}$ nach halber Schwingdauer darstellt. Eine Viertelperiode nach Zünden des Umschwingventils tritt der maximale Umschwingstrom $\hat{I}$ auf. Mit den Größen

$$g = \hat{I}/I_a,$$
$$K_1 = g + h^4 (g-0,5),$$
$$K_2 = g^2 - h^4 (g-1)^2$$

ergibt sich die optimale Aufteilung der Schwingkreisinduktivität auf die Drosseln $L_{SS}$ und $L_{SW}$ zu

$$L_{SW}/(L_{SW} + L_{SS}) = K_1 - K_1^2 - K_2.$$

Die Einhaltung dieser Dimensionierung erweist sich nicht als kritisch, so daß auch Abweichungen von 20% und darüber möglich sind.

**Patentansprüche**

1. Gleichstromstellerschaltung mit

a) einem in eine (7) der beiden Verbindungsleitungen (7, 9) zwischen einer Gleichspannungsquelle (1) und einer Last (4, 5) angeordneten steuerbaren Hauptventil (HT),

b) einem die beiden Anschlüsse (1, 6) des Hauptventils verbindenden Löschzweig (LT, C) mit einem parallel zum Hauptventil (HT) gepolten steuerbaren Kommutierungsventil (LT) und einem dem Kommutierungsventil lastseitig nachgeschalteten Kommutierungskondensator (C),

c) einem in Reihe mit dem Kommutierungsventil (LT) und parallel zum Kommutierungskondensator (C) angeordneten Umschwingzweig ($L_{SW}$, UT) mit einem in Stromflußrichtung des Kommutierungsventils gepolten steuerbaren Umschwingventil (UT) mit vorgeschalteter Umschwingdrossel ($L_{SW}$),

d) einem ebenfalls in Reihe mit dem Kommutierungsventil (LT) und parallel zum Kommutierungskondensator (C) angeordneten Rückschwingzweig (RD, $L_{SW}$) mit einem entgegen der Stromflußrichtung des Kommutierungsventils (LT) gepolten Rückschwingventil (RD) mit vorgeschalteter Rückschwingdrossel (L$_{SW}$),

e) einem zur Last (4, 5) parallelen ersten Freilaufventil (FD1) für den Laststrom,

gekennzeichnet durch

f) eine innerhalb des zum Rückschwingzweig (RD, L$_{SW}$) parallelen Teiles des Löschzweiges dem Kommutierungskondensator (C) lastseitig nachgeordnete weitere Drossel (L$_{SS}$) und

g) ein zweites Freilaufventil (FD2), das die andere von der Spannungsquelle (1) zur Last (4, 5) führende Verbindungsleitung (9) mit dem lastseitigen Anschluß des Kommutierungskondensators (C) verbindet und parallel zum ersten Freilaufventil (FD1) gepolt ist.

2. Gleichstromstellerschaltung nach Anspruch 1, dadurch gekennzeichnet, daß als Rückschwingdrossel und Umschwingdrossel eine gemeinsame Drossel (L$_{SW}$) verwendet wird und sich bei Abweichungen bis 20% das Induktivitätsverhältnis dieser Drossel zur weiteren Drossel (L$_{SS}$) ergibt zu

$$\frac{L_{SW}}{L_{SS} + L_{SW}} = K_1 - K_1^2 - K_2,$$

wobei

$g = \hat{I}/I_a,$
$K_1 = g + h^4 (g - 0.5),$
$K_2 = g^2 - h^4 (g - 1)^2$

und I$_a$ der Laststrom, Î der Umschwingstrom des Schwingkreises (L$_{SS}$, L$_{SW}$, C) bei einer Viertelperiode nach Zünden des Umschwingventils und die Schwingkreisdämpfung h das Verhältnis der Kondensatorspannung des Schwingkreises vor Zünden des Umschwingthyristors und eine halbe Periode danach ist.

## Claims

1. A d.c. regulator circuit having:

a) a controllable main gate device (HT) arranged in one (7) of two connection lines (7, 9) between a d.c. voltage source (1) and a load (4, 5),

b) a discharge path (LT, C) which connects the two terminals (1, 6) of the main gate device (HT) and contains a controllable commutating gate device (LT) poled parallel to the main gate device (HT) followed by a commutating capacitor (C) at the load end;

c) a reverse-swinging path (L$_{SW}$, UT) arranged in series with the commutating gate device (LT) and parallel to the commutating capacitor (C), and containing a controllable reverse-swinging gate device (UT) poled in the direction of current flow of the commutating gate device and preceded by a reverse-swinging (L$_{SW}$),

d) a reset-swinging path (RD, L$_{SW}$) arranged in series with the commutating gate device (LT) and parallel to the commutating capacitor (C) and containing a reset-swinging gate device (RD) oppositely poled to the direction of current flow of the commutating gate device (LT) and preceded by a reset-swinging choke (L$_{SW}$),

e) a first free-running gate device (FD1) parallel to the load (4, 5), for the load current,

characterised by

f) a further choke (L$_{SS}$) connected at the load end of the commutating capacitor (C) in the discharge path and parallel to the reset-swinging path (RD, L$_{SW}$) and

g) a second free-running gate device (FD2) which connects the other connection line (9) leading from the voltage source (1) to the load (4, 5), to the terminal of the commutating capacitor (C) at the load end and poled in parallel to the first free-running gate device (FD1).

2. A d.c. regulator circuit as claimed in Claim 1, characterised in that a common choke (L$_{SW}$) is used as the reverse-swinging choke and reset-swinging choke and for tolerances up to 20% the inductance ratio of this choke to the further choke (L$_{SS}$) is

$$\frac{L_{SW}}{L_{SS} + L_{SW}} = K_1 - K_1^2 - K_2;$$

where: —

$g = \hat{I}/I_a;$
$K_1 = g + h^4 (g - 0.5);$
$K_2 = g^2 - h^4 (g - 1)^2;$

I$_a$ is the load current;

Î is the reverse-swinging current of the oscillatory circuit (L$_{SS}$, L$_{SW}$, C) at a quarter of a period after the triggering of the reverse-swinging gate device; and

h = the attenuation of the oscillatory circuit given by the ratio of the capacitor voltage of the oscillatory circuit prior to the triggering of the reverse-swinging thyristor and at half a period thereafter.

## Revendications

1. Circuit de réglage de courant continu, avec

a) une soupape électrique principale (HT) commandée et disposée dans l'un (7) des conducteurs (7, 9) entre une source de tension continue (1) et une charge,

b) une branche d'extinction (LT, C) reliant les deux bornes (1, 6) de la soupape électrique, avec une soupape électrique de commutation commandable (LT) monté en parallèle sur la soupape électrique principale (HT), et un condensateur de commutation (C) monté en aval et du côté de la charge de la soupape de commutation,

c) un circuit d'inversion de la charge ($L_{SW}$, UT) disposé en série avec la soupape de commutation (LT) et en parallèle sur le condensateur de commutation (C), avec une soupape d'inversion de la charge (UT) commandée, montée dans le sens de la conduction de courant de la soupape de commutation, et avec une self amont ($L_{SW}$) d'inversion de la charge,

d) une branche de retour à la charge de polarité initial (RD, $L_{SW}$) également en série avec la soupape de commutation (LT) et en parallèle sur le condensateur de commutation (C), et comportant une soupape de retour à la charge de polarité initale (RD), branchée dans le sens opposé à la conduction de courant de la soupape de commutation (LT), avec une self amont ($L_{SW}$) de retour à la charge de polarité initiale,

e) une première soupape électrique à régime libre (FD1) pour le courant de charge et montée en parallèle sur la charge,

caractérisé par

f) une seconde self ($L_{SS}$) montée en aval et du côté de la charge du condensateur de commutation (C), dans la partie d'extinction qui est parallèle à la branche de retour à la charge de polarité initiale (RD, $L_{SW}$), et

g) une seconde soupape en régime libre (FD2), qui relie l'autre conducteur de liaison (9) menant de la source de tension (1) à la charge (4, 5), avec la borne du condensateur de commutation (C) qui est située du côté de la charge, et qui est monté en parallèle sur la première soupape électrique en régime libre (FD1).

2. Circuit de réglage de courant continu selon la revendication 1, caractérisé par le fait que l'on utilise pour la self de retour à la charge de polarité initiale et pour la self d'inversion de la charge, une self commune ($L_{SW}$), et que pour un écart jusqu'à 20%, le rapport d'inductivité de cette self à la seconde self ($L_{SS}$) donne

$$\frac{L_{SW}}{L_{SS} + L_{SW}} = K_1 - K_1^2 - K_2,$$

relation dans laquelle

$$g = \hat{I}/I_a,$$
$$K_1 = g + h^4 (g-0,5),$$
$$K_2 = g^2 - h^4 (g-1)^2$$

et $I_a$ est le courant de charge, $\hat{I}$ est le courant d'inversion du circuit oscillant ($L_{SS}$, $L_{SW}$, C) pour un quart de période après l'amorçage de la soupape électrique d'inversion de la charge et l'atténuation h du circuit oscillant est le rapport de la tension du condensateur du circuit oscillant avant l'amorçage de thyristor d'inversion de charge et une demi-période après.